# EUROPEAN PATENT APPLICATION

(11) **EP 1 598 600 A2**
(43) Date of publication of application: **23.11.2005**
(21) Application number: 05103007.0
(22) Date of filing: 15.04.2005
(51) Int. Cl.: F24F 1/00

(54) **Air conditioning system with humidity adjusting apparatus.**

(30) Priority: 21.05.2004 KR 2004036428
(71) Applicant: LG ELECTRONICS INC., Seoul 150-875 (KR)
(72) Inventor: Jung, In Hwa, Seoul (KR); Lee, Jung Woo, Seoul (KR); Bae, Seong Won, Seoul (KR); Chin, Sim Won, Gyeonggi-do (KR)
(74) Representative: Ekström, Nils

(57) **Abstract**

An air conditioning system includes an indoor unit disposed in an interior side, an outdoor unit disposed in an exterior side to direct a refrigerant to the indoor unit, the outdoor unit comprising a compressor for compressing the refrigerant, a heat exchanger for condensing the refrigerant compressed in the compressor, a fan for forcedly generating air current, and a motor for driving the fan, and a humidity adjusting apparatus formed on one of both sides of the outdoor unit to direct humidity adjusted air to the interior side.

## Description

### BACKGROUND OF THE INVENTION

### Field of the Invention

The present invention relates to an air conditioning system with a humidity adjusting apparatus, and more particularly, to an air conditioning system with which a humidity adjusting apparatus is associated to provide a more improved convenience to a user.

### Description of the Related Art

Generally, an air conditioner is for controlling, especially lowering, the temperature of an enclosed space. A separation type air conditioner is separated into an outdoor unit and an indoor unit. The outdoor unit includes a compressor, a condenser and a fan. When the air conditioner is turned on, the condenser condenses a refrigerant. The indoor unit includes a vaporizer and a fan. In a cooling mode, indoor air is introduced in the indoor unit and heat-exchanged with the refrigerant that passes through the vaporizer after being condensed in the outdoor unit. The heat-exchanged indoor air is exhausted to the interior side to lower the temperature of the interior side.

Such a prior air conditioner has only a temperature controlling function. That is, the prior air conditioner cannot perform perfect air conditioning for both the temperature and humidity of the enclosed space.

To solve the problem, a humidity control apparatus for increasing/decreasing humidity of the enclosed space may be associated with the air conditioner. When the humidity control apparatus is associated with the air conditioner, since humidity-controlled air is supplied to the enclosed space through a predetermined passage, the more agreeable interior environment can be realized. That is, the humidity control apparatus functions to increase or decrease humidity in the enclosed space.

However, the humidity control apparatus is formed as an independent device from the air conditioner and used by being simply disposed around, especially on the outdoor unit of the air conditioner. That is, distributing lines of the humidity control apparatus and the outdoor unit are independently connected to the interior side, making it inconvenient for a user to properly manipulate the both of them. Therefore, there is a need for a scheme that can improve the user's convenience by properly associating the humidity control apparatus with the outdoor unit of the air conditioner.

Particularly, when the humidity control apparatus is simply disposed on and integrated with the outdoor unit as a single unit, the height of the integrated unit is increased, thereby enlarging the installing space and deteriorating the outer appearance.

### SUMMARY OF THE INVENTION

Accordingly, the present invention is directed to an air conditioning system with a humidity adjusting apparatus that is systemically associated with an outdoor un it of the air conditioning system so that a user can conveniently use the same and the installing space can be saved.

To achieve these objects and other advantages and in accordance with the purpose of the invention, as embodied and broadly described herein, there is provided an air conditioning system comprising: an indoor unit disposed in an interior side; an outdoor unit disposed in an exterior side to direct a refrigerant to the indoor unit, the outdoor unit comprising a compressor for compressing the refrigerant, a heat exchanger for condensing the refrigerant compressed in the compressor, a fan for forcedly generating air current, and a motor for driving the fan; and a humidity adjusting apparatus formed on one of both sides of the outdoor unit to direct humidity adjusted air to the interior side.

In another aspect of the present invention, there is provided an air conditioning system comprising: an indoor unit disposed in an interior side; an outdoor unit comprising a heat exchanger for condensing a refrigerant, a fan for forcedly directing air toward the heat exchanger, and a fan driving motor for driving the fan; a refrigerant tube unit connecting the outdoor unit to the indoor unit; a desiccant disposed on one of both sides of the outdoor unit to selectively collect moisture; a desiccant driving motor for rotating the desiccant; a blower unit for forcedly directing air to the desiccant; a heater for heating a portion of the desiccant; and a humidity adjusting tube unit for directing humidity-adjusted air to the interior side.

In still another aspect of the present invention, there is provided an air conditioning system comprising: an outdoor unit comprising a compressor and a heat exchanger that are disposed facing each other; a mounting unit formed on one of both sides of the outdoor unit; and a humidity adjusting unit selectively mounted on the mounting unit.

According to the present invention, since the humidity adjusting unit is disposed on a side of the outdoor unit such that the humidity adjusting tubes covers the connecting tubes of the outdoor and indoor tubes, the deterioration of the outer appearance and the corrosion of the connecting tubes can be prevented.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a perspective view of an outdoor unit of an air conditioning system, which is associated with a humidity adjusting apparatus according to an embodiment of the present invention;

Fig. 2 is a partly broken perspective view of an outdoor unit according to an embodiment of the present invention;

Fig. 3 is a sectional view taken along line I-I' of Fig. 2;

Fig. 4 is a perspective view of a mounting unit according to an embodiment of the present invention; and

Figs. 5 and 6 are exploded perspective views illustrating an operation of a humidity adjusting apparatus associated with an outdoor unit of an air conditioning system according to the present invention.

### DETAILED DESCRIPTION OF THE INVENTION

Reference will now be made in detail to the preferred embodiments of the present invention, examples of which are illustrated in the accompanying drawings.

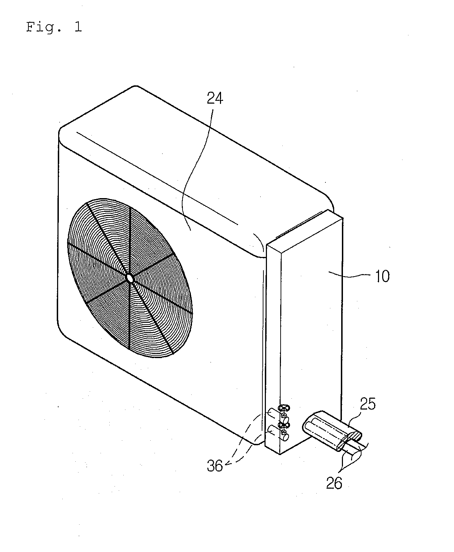

Fig. 1 shows a perspective view of an outdoor unit of an air conditioning system, which is associated with a humidity adjusting apparatus, according to a first embodiment of the present invention.

Referring to Fig. 1, a humidity adjusting apparatus 10 is mounted one of left and right sides of an outdoor unit 24 to adjust humidity of an interior side. Preferably, to improve the space efficiency, the humidity adjusting apparat us 10 is disposed on a side of the outdoor unit 24, which is closed to a compressor.

That is, an air conditioning system includes an outdoor unit 24 for performing a heat -exchange, a humidity adjusting apparatus 10 formed on a side of the outdoor unit 24, first and second humidity adjusting tubes 25 extending from a lower side of the humidity adjusting apparatus 10 to the interior side, the humidity adjusting tube to function as an air passage communicating the humidity adjusting apparatus 10 with the interior side, and first and second refrigerant tubes 26 connecting the outdoor unit 24 to an indoor unit (not shown) to function as a refrigerant flow passage.

The first refrigerant tube 26 is an intake tube for directing the refrigerant to the outdoor unit 24 and the second refrigerant tube 26 is an exhaust tube for directing the refrigerant to the indoor unit. The first humidity adjusting tube 25 is an intake tube for directing air into the humidity adjusting apparatus and the second humidity adjusting tube 25 is an exhaust tube for directing humidity-controlled air to the interior side.

The humidity adjusting tubes 25 are designed covering the refrigerant tubes 26 so that the refrigerant tubes 26 are not exposed to avoid deteriorating the overall outer appearance. Furthermore, a service valve 36 of the outdoor unit 24 can be hidden by an outer housing of the humidity adjusting apparatus 10, thereby further avoiding deteriorating the overall outer appearance.

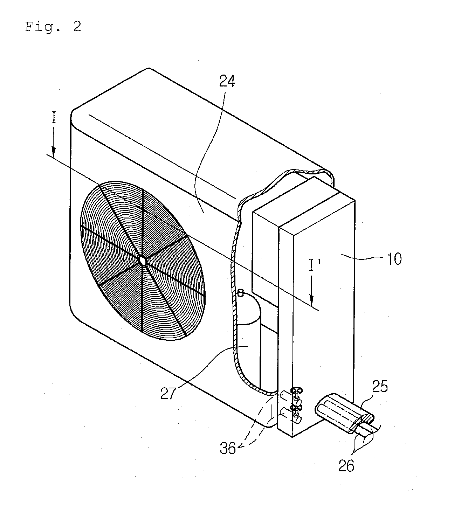

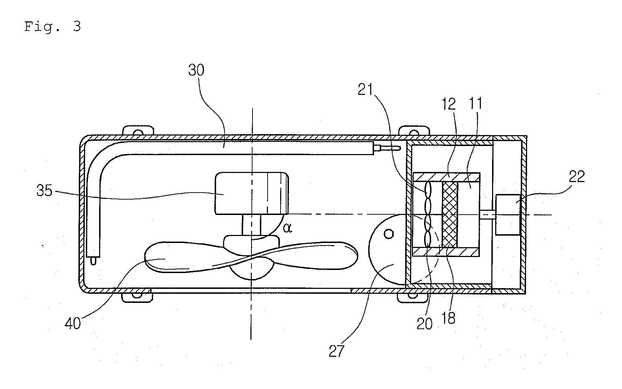

Figs. 2 and 3 show an outdoor unit according to an embodiment of the present invention.

Referring to Figs. 2 and 3, as described above, the humidity adjusting apparatus 10 is disposed on a side of the outdoor unit 24, preferably on a side where the compressor 27 of the outdoor unit 24 is located. That is, a portion above the compressor 27 is generally in an empty space. Therefore, when the humidity adjusting apparatus 10 is disposed on the side where the compressor 27 is located, some elements of the humidity adjusting apparatus can be disposed in the empty space, improving the space efficiency.

Describing in more detail, the outdoor unit 24 includes a heat exchanger 30 for performing the heat -exchange using the refrigerant flowing therein, a fan and fan motor 40 and 35 for forcedly generating air current toward the heat exchanger 30, and a compressor 27 for compressing the refrigerant. The humidity adjusting apparatus 10 includes an outdoor fan 20 for forcedly generating outdoor air current and an indoor fan 21 for forcedly generating indoor air current. The humidity adjusting apparatus 10 further includes a humidity adjusting unit 11, a rotating unit 22 for rotating the humidity adjusting unit 11, a heater 18 for heating a portion of the humidity adjusting unit 11, and a mounting unit 12 for mounting the humidity adjusting unit 11.

The humidity adjusting unit 11 includes a desiccant unit, being detachably mounted on the mounting unit 12. The rotating unit 22 may be integrally formed with the humidity adjusting unit 11. Alternatively, the rotating unit 22 may be connected to the humidity adjusting unit 11 by a connecting member such as a belt. In this embodiment, the rotating unit 22 is integrally mounted on the mounting unit 12. A motor may be used as the rotating member so that the desiccant of the humidity adjusting unit 11 can rotate by a rotating shaft of the motor.

The outdoor and indoor fans 20 and 21 are disposed on a space above the compressor 27. That is, the outdoor unit 24 shares its installing space with the humidity adjusting apparatus 10, improving the space efficiency. In the outdoor unit 24, a rotating shaft connecting a fan driving motor 35 and a blower fan 40 may be inclined at a predetermined angle α with respect to a rotational shaft connecting the humidity adjusting unit 11 to the rotating unit 22. It is preferable that the predetermined angle α is in a rage of 70-110°. As described above, by disposing the rotational shaft of the outdoor unit at the predetermined angle with respect to the rotational shaft of the humidity adjusting apparatus, the installing space for the humidity adjusting apparatus may be formed to be perpendicular to the space above the compressor 27, thereby making it possible t o more effectively install the humidity adjusting apparatus 10. That is, by disposing the rotational shaft of the outdoor unit at the predetermined angle to the rotational shaft of the humidity adjusting apparatus, the humidity adjusting apparatus 10 can be installed in a minimized space defined on a side of the outdoor unit 24.

The humidity adjusting tubes 25 are disposed covering the upper-half of the refrigerant tubes 26 to prevent the refrigerant tubes 26 from being corroded and improve the outer appearance. Therefore, it is preferable that the humidity adjusting tubes 25 are integrally formed with the refrigerant tubes 26.

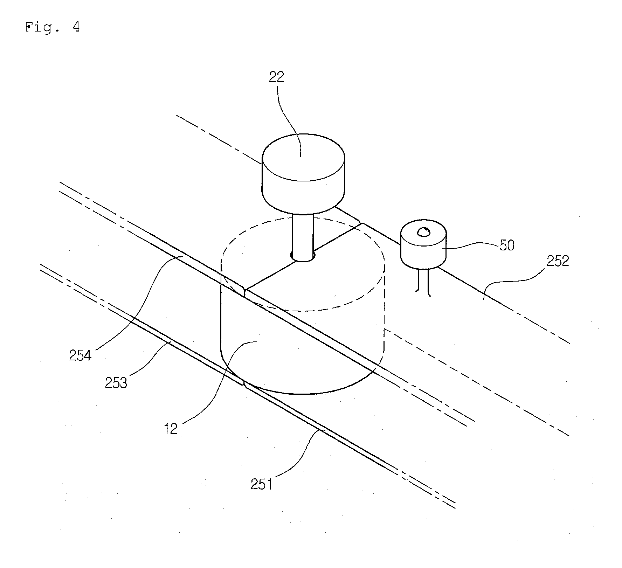

Fig. 4 shows the mounting unit according to an embodiment of the present invention.

As shown in the drawing, the humidity adjusting unit 11 is disposed inside the mounting unit 12. The mounting unit 12 may be provided with four air passages. That is, the mounting unit 12 is provided with an indoor side intake passage 251 through which indoor air is introduced into the mounting uni t 12, an indoor side supply passage 252 through which air is introduced from the mounting unit 12 to the interior side, an outdoor side intake passage 253 through which outdoor air is introduced, and an outdoor side supply passage 254 through which interior air is introduced from the mounting unit 12 to the exterior side.

The indoor side intake passage 251 is connected to the interior side to direct the air from the interior side to the mounting unit 11. The air directed into the mounting unit 11 is humidity-controlled by the humidity adjusting unit 11 and then exhausted to the interior side through the indoor side supply passage 252. Outdoor air is introduced into the humidity adjusting unit 11 through the outdoor side intake passage 253, humidity-controlled by the humidity adjusting unit 11 and exhausted to the exterior side through the outdoor side supply passage 254.

In addition, the indoor side intake passage 251 and the indoor side supply passage 252 are integrally formed and connected to the interior side, thereby defining the humidity adjusting tubes 25. The humidity adjusting tubes 25 are also integrally formed with the refrigerant tubes 26, thereby improving the convenience in use.

An oxygen generator 50 is formed on the indoor side supply passage 252 to supply oxygen into the air being supplied to the interior side, thereby further improving the interior environment. The oxygen generator 50 may be formed on an inner side of the indoor side supply passage 252. Alternatively, as shown in the drawing, the oxygen generator 50 may be formed on an outer side of the indoor side supply passage 252 and connected to the indoor side supply passage 252 by a tube. In this case, the oxygen generated by the oxygen generator 50 is first introduced into the indoor side supply passage 252 and then supplied to the interior side.

The rotating unit 22 may be formed of a motor connected to the humidity adjusting unit 11 by a belt structure or a gear structure.

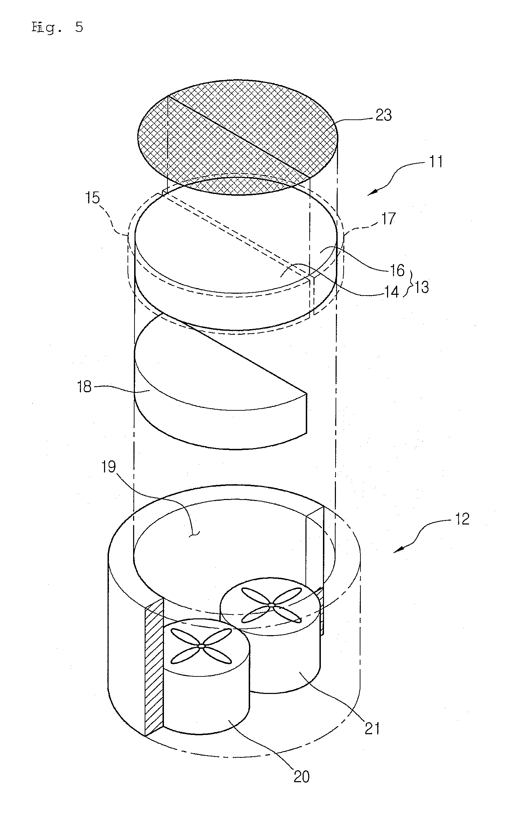

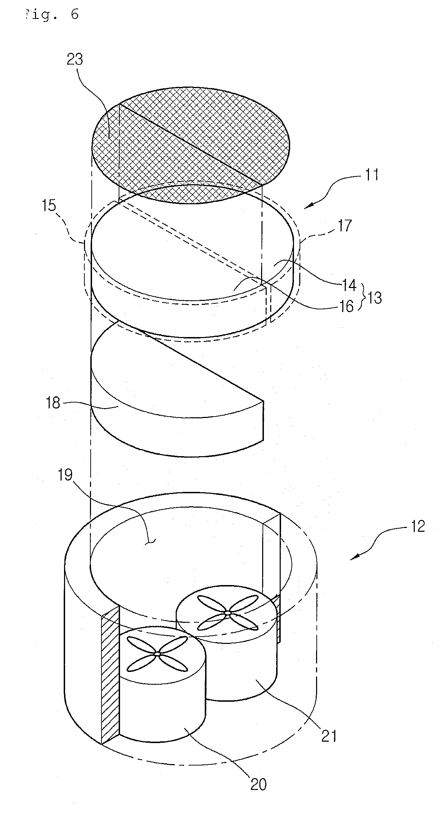

Figs. 5 and 6 illustrates an operation of a humidity adjusting apparatus associated with an outdoor unit of an air conditioning system according to the present invention.

The humidity adjusting unit 11 is comprised of the disk-shaped desiccant 13 for performing a humidifying/dehumidifying operation and the heater 18 disposed beside the desiccant 13 to heat the air. The humidity adjusting unit 11 may further include a filter 23 for removing dusts contained in the indoor/outdoor air. The filter 23 may be formed on only one side of the desiccant 13 where the indoor air flows to remove the dusts contained in the indoor air.

To effectively heat the air, it is preferable that the heater 18 is mounted between the desiccant 13 and the outdoor air blower fan 20. The humidity adjusting unit 11 is divided into a humidifying section and a dehumidifying section. The humidifying section 15 is for supplying moisture to the air by heating the desiccant 13 and the dehumidifying section 17 is for absorbing the moisture from the air passing through the desiccant 13 to lower the humidity of the air.

The humidifying section 15 is defined on a part close to the heater 18 and the dehumidifying section 17 is defined on a part remote from the heater 18. The desiccant 13 is divided into a dehumidifying portion 16 formed in the dehumidifying section 17 to remove the moisture from the air passing therethrough and a humidifying portion 14 for supplying the moisture to the introduced air. Therefore, as the desiccant 13 rotates, a portion of the desiccant 13, which is located in the dehumidifying section 17 functions as the dehumidifying portion and another portion of the desiccant 13, which is located in the humidifying section 17, functions as the humidifying portion 14. In this case, since the desiccant 13 rotates by the rotating unit 22, the dehumidifying portion 16 and the humidifying portion 14 alternate their functions repeatedly.

There are further provided a cavity 19 defined above the mounting unit 12 to fixedly receive the humidity adjusting unit 11. The outdoor and indoor fans 20 and 21 are provided on a side opposite to the cavity 19 to forcedly direct air to the cavity 19.

The operation of the above-described humidity adjusting apparatus will be described hereinafter.

When the humidity adjusting apparatus is intended to be used as a dehumidifier, the fans 20 and 21 are operated to direct the indoor and outdoor airs into the humidity adjusting unit 11, in the course of which the dusts contained in the indoor air may be removed as the indoor air passes through filter 23.

The indoor air directed into the humidity adjusting unit 11 passes through the dehumidifying portion 16 located in the dehumidifying section 17, in the course of which the moisture contained in the indoor air can be absorbed into the dehumidifying portion 16 to be converted into dehumidified air and directed to the interior space. While the dehumidified air directed to the interior space absorbs moisture contained in the indoor air to lower the humidity of the interior space.

At this point, the desiccant 13 rotates by the rotating unit 22 at a predetermined time interval. Accordingly, the position of the desiccant 13 is displaced as shown in Fig. 6. When the desiccant 13 rotates by a predetermined angle, the positions of the dehumidifying and humidifying portions 1 6 and 14 alter.

Referring to Fig. 6, after the dehumidifying portion 16 absorbs the moisture at the dehumidifying section 17, it is displaced to the humidifying section 15. Therefore, it can be noted that the dehumidifying portion 16 located in the humidifying section 15 is fully filled with the moisture. The dehumidifying portion 16 is applied with heated air by the outdoor fan 20. The air supplied by the outdoor fan 20 becomes high temperature air heated by the heater 18.

The high temperature air pass es through the dehumidifying portion 16 located on the humidifying section 15, in the course of which the moisture contained in the dehumidifying portion 16 is vaporized by the high temperature air. Therefore, the dehumidifying portion 16 is returned to the dried state and the vaporized moisture is mixed with the outdoor air and exhausted to an exterior side. This process is repeated continuously to perform the dehumidifying function of the humidity adjusting apparatus 10.

When the humidity adjusting apparatus 10 is intended to be used as a humidifier, the heater is located on the dehumidifying section 17. That is, to increase the humidify of the interior side, the moisture is absorbed in the desiccant 12 at the humidifying section 15 and is discharged fr om the desiccant 13 at the dehumidifying section 17, thereby realizing the humidifying function. The humidifying mode can be conveniently applied when it is required that a humidity of the interior side is increased in, for example, a winter season. In addition, it can be easily noted that the heater 18 is located on the dehumidifying section 17 to discharge the moisture from the desiccant 13 to the interior side.

According to another embodiment of the present invention, the mounting unit 12 can be appli ed both the indoor and outdoor sides, on one of which the humidity adjusting unit 11 is mounted. That is, the mounting unit 12 and the humidity adjusting unit 11 can be designed as an independent unit. For example, the desiccant, heater and filter 13, 1 8 and 23 of the humidity adjusting unit 11 can be integrated into a single unit so that it is convenient for the user to easily move the humidity adjusting unit 11. In addition, a variety of elements such as sensors, sockets, wires and the like are formed on the mounting portion so that the humidity adjusting unit 11 can be detachably mounted on the mounting unit 12. Accordingly, when the user intends to selectively mount the humidity adjusting unit 11 on one of the indoor and outdoor mounting unit 12 according to a seasonal variation, the user can easily move and mount the humidity adjusting unit 11 to the desired mounting unit 12.

According to the present invention, since the humidity adjusting unit is disposed on a side of the outdoor unit such that the humidity adjusting tubes covers the connecting tubes of the outdoor and indoor tubes, the deterioration of the outer appearance and the corrosion of the connecting tubes can be prevented.

In addition, some elements of the humidity adjusting apparatus are arranged on an empty space defined above the compressor of the outdoor unit, thereby improving the space efficiency. Furthermore, since the air conditioning part and the humidity adjusting part are effectively associated with each other as a single unit, the user can conveniently use the air conditioning part and the humidity adjusting part.

It will be apparent to those skilled in the art that various modifications and variations can be made in the present invention. Thus, it is intended that the present invention covers the modifications and variations of this invention provided they come within the scope of the appended claims and their equivalents.

## Claims

1. An air conditioning system comprising:
an indoor unit disposed in an interior side;
an outdoor unit disposed in an exterior side to direct a refrigerant to the indoor unit, the outdoor unit comprising a compressor for compressing the refrigerant, a heat exchanger for condensing the refrigerant compressed in the compressor, a fan for forcedly generating air current, and a motor for driving the fan; and
a humidity adjusting apparatus formed on one of both sides of the outdoor unit to direct humidity adjusted air to the interior side.

2. The air conditioning system according to claim 1,
wherein the humidity adjusting apparatus is formed on a side of the outdoor unit, which is close to the compressor.

3. The air conditioning system according to claim 1,
wherein a part of the humidity adjusting apparatus is disposed in an empty space defined above the compressor.

4. The air conditioning system according to claim 1,
wherein a blower unit of the humidity adjusting apparatus is disposed in an empty space defined above the compressor.

5. The air conditioning system according to claim 1, wherein a humidity adjusting tube unit of the humidity adjusting apparatus is disposed covering a refrigerant tube unit of the outdoor unit.

6. The air conditioning system according to claim 1, wherein the humidity adjusting apparatus is disposed covering a service valve formed on a side of the outdoor unit.

7. The air conditioning system according to claim 1, wherein a humidity adjusting tube unit of the humidity adjusting apparatus is integrally formed with a refrigerant tube unit of the outdoor unit.

8. The air conditioning system further comprising,
a rotational shaft of the fan driving motor;
a round desiccant disposed in the humidity adjusting apparatus;
a desiccant driving motor for rotating the desiccant;
wherein an angle between the rotational shaft of the fan driving motor and a rotating shaft of the desiccant driving motor is in a range of about 70-110°.

9. The air conditioning system according to claim 1, further comprising an oxygen generator connected to an supply passage which is connected from the humidity adjusting apparatus to indoor side.

10. The air conditioning system according to claim 1, Wherein the humidity adjusting apparatus comprises a mounting unit; and
a humidity adjusting unit selectively mounted on the mounting unit.

11. The air conditioning system according to claim 1, wherein an desiccant is disposed in the humidity adjusting apparatus, and the desiccant is detachable.
